# EUROPEAN PATENT APPLICATION

(11) **EP 2 404 490 A2**
(43) Date of publication of application: **11.01.2012**
(21) Application number: 10165271.7
(22) Date of filing: 08.06.2010
(51) Int. Cl.: A01B 33/02, A01B 39/16, A01B 63/02

(54) **Agricultural weeding machine**

(30) Priority: 08.06.2009 IT MN20090016
(71) Applicant: Guerrieri Gonzaga, Edoardo, 46030 Sustinente (Mantova) (IT); Guerrieri Gonzaga, Aliana, 20129 Milano (IT)
(72) Inventor: Guerrieri Gonzaga, Edoardo, 46030 Sustinente (Mantova) (IT)
(74) Representative: Gustorf, Gerhard

(57) **Abstract**

Mono and bilateral device suitable for shredding the grass field between rows of vineyards, orchards and hedges and for the simultaneous mulching of the plant row foot. The device performs both shredding and mulching operations with a single rotor and is capable of varying its working width also while in motion.

## Description

### This invention refers to an agricultural device as per the introduction of claim 1.

More specifically the subject of this invention is a mechanized multi-function agricultural device suitable to simultaneously carry out shredding operations of green covered strips between rows of vineyards, orchards and hedges, as well as the vegetable mulching at the foot of said plant rows in order to hinder the growth of weeds and reduce chemical weed-killing.

The device can be manufactured in the mono or bilateral version as it is featured by two parallel and opposite shredding-mulching units, being transversal with respect to the plant rows and housed into a frame fitted onto the front or rear lifting device of a tractor driving through the plant row; thanks to a specific control device, the units can also slide transversally with respect to the frame itself. Each unit is composed of a horizontal rotor axially equipped with cutting and/or ventilating knives and is driven by a mechanic or an oleo-dynamic motor. The rotor is contained into a very enveloping protective covering, having open heads, though protected by duly shaped and removable covers. The protective covering head lets in the air attracted by the ventilating knives, preferably integrated by an axial rotor fan or by a centrifugal fan, placed ahead of the rotor in order to create a flux inside the protective covering which gradually collects the fine grass, conveys it to the mulching head and deposits it on the ground.

The two-row device can vary its working width by making the two units slide transversally in order to adjust themselves to variably wide plant row strips, even when in motion so as to avoid possible side obstacles such as misaligned or irregular stubs; the device can also automatically get back to its normal position.

At present no agricultural device is known that simultaneously carries out bilateral shredding and mulching operations, the working width of which can vary even while in motion; at the same time no horizontal rotor is known being equipped with multiple knives of the shredding and ventilating type or ventilating type only suitable to create an air flux inside the protective covering that conveys the fine grass to the mulching mouth at the foot of the plant row.

The invention proposed, instead, is suitable to perform the above, thanks to innovative elements such as:
**a)** the possibility for each operating unit to slide transversally along guides of the central frame by means of actuators such as double-effect hydraulic jacks, or electro-mechanic ones, such as worn screw or rack electric motors placed on each side between the central frame and a given point of the operating unit and preferably housed into a dedicated structure of the frame. The actuators are controlled by the operator thanks to a dedicated hydraulic or electric circuit, or preferably automatically by trunk proximity sensors (for ex. of the laser or ultrasound type), which send the detected measures to a PLC and a dedicated electronic cabinet and are suitable to communicate the pre-set positioning to the actuators, to temporarily vary it in order to avoid side obstacles such as trunk misalignments or irregularities and to get back to the pre-set position controlled by encoders or linear extensions;
**b)** the invention of ventilating or shredding-ventilating knives of the semi-oscillating type duly fitted in couples along the rotor generating lines of each operating unit and suitable to perform ventilation by duly shaping the knife body with a higher rear edge, so as to make them suitable to create the air flow inside the protective covering, while rotating;
**c)** each unit is composed of an open protective covering which conveys a transversal flow between the two heads and which envelopes the rotor as much as possible. The front edge of the protective covering supports adjacent plates with controlled mechanical oscillation, suitable to face and bend the grass they get in contact with, whereas the rear edge is chute-shaped and preferably ends with a flexible flap that touches the fine grass in order to contain air and fine grass, i.e. the mixture flow going towards the mulching head. The above forms a tunnel between the protective covering and the grass field underneath, thus reducing the side air losses and maintaining the air flow that pneumatically conveys the fine grass to the mulching mouth;
**d)** the rotor motorization can mechanically take place by means of a universal shaft connected to the tractor power take-off thanks to adequate shafts, driving gears, straps and pulleys fitted onto the central frame, which operate each rotor thanks to an externally shaped shaft (for ex. a dovetailed shaft) entering a similarly shaped female hole of the knife rotor; in this way it can transfer the motion to the various positions taken by the unit while sliding to cope with the required working width; as an alternative and preferably, in case an adequate pump is available, it can directly transmit the motion to each unit through an oleo-dynamic motor placed ahead of the suction head fan, thus forming, along with the rotor and the protective covering a group that slides together with the operating unit along the dedicated frame guides, with its positioning controlled by a suitable linear encoder that measures the reciprocal frame-operating unit position and therefore the working width;
**e)** the working width handling, calling for a "standard" (or reference) positioning, controlled either by the operator or automatically, and including side tolerances (limits which can be calibrated), so as to permit limited deviations from the ideal driving line without corrections when exceeding the limits and temporary automatic interventions driven by proximity detectors and processed by an electronic cabinet which make the unit affected by obstacles partially retract as much as necessary; the unit is then correctly repositioned thanks to the above mentioned control device, so as to reduce the action of the operator who should check the two row sides at a time and that of the electronic components and of the hydraulic oil, so as to avoid their overheating, a phenomenon that would occur in case of continuous operation;
**f)** the rotor of the first unit is composed of several sections; the outer one (towards the mulching head) is always geared with the motorization by a 50% length with respect to the total rotor length; the inside part is composed of one or more sections and can be made idle, and therefore basically still and unshredding; as an alternative it can become integral with the outer section, in order to make comparable enough the width of the grass field cut by the first and second units in their various positions and thus obtain rather similar mulching volumes on the two adjacent rows;
**g)** the clutch/release of the inside rotor sections can be performed either with manual solutions, i.e. with the device standing still, such as screws or outer radial posts, or automatically thanks either to cams which can be manufactured on the shaped shaft inside the rotor in case of mechanical motorization, or to electro-magnets connected also in this case to the reciprocal central frame / operating unit position, and in any case operating the clutches/releases with radial inside posts or front posts inside the rotor sections;
**h)** the clutches are arranged in an asymmetrical way in order to guarantee the dynamic balancing of the rotor under any condition;
**i)** the suction head cover is featured by air intakes in an upward position and directed towards the protective covering in order to avoid any grass obstruction;
**l)** the mulching head cover with its section increasing towards the exit mouth in order to slow down the air-fine grass flow, thus facilitating a regular distribution of the fine grass;
**m)** both suction and mulching covers can be easily removed and are preferably fixed to the heads by means of cam screws.

Additional features and advantages of this invention will be more evident when reading the detailed description herebelow, which is provided simply as a non limiting example and is referred to the following attached drawings:
Figure1 shows a plan view of three positions a, b and c of the device as per the invention in its variable width bilateral version,
figure 2 shows a perspective view of the device,
figure 3 shoes a partially subdivided view of the first unit rotor,
figure 4 shows a cutting - ventilating knife in a larger scale,
figure 5 shows a simply ventilating knife,
figure 6 shows an example of the coupling of the two knives with the rotor,
figure 7 shows a side view of the device as per this invention,
figure 8 shows the suction side of a mono-lateral unit,
figure 9 shows the mulching side of the unit and
figure 10 shows the unit as per figure 9 with its cover closed.

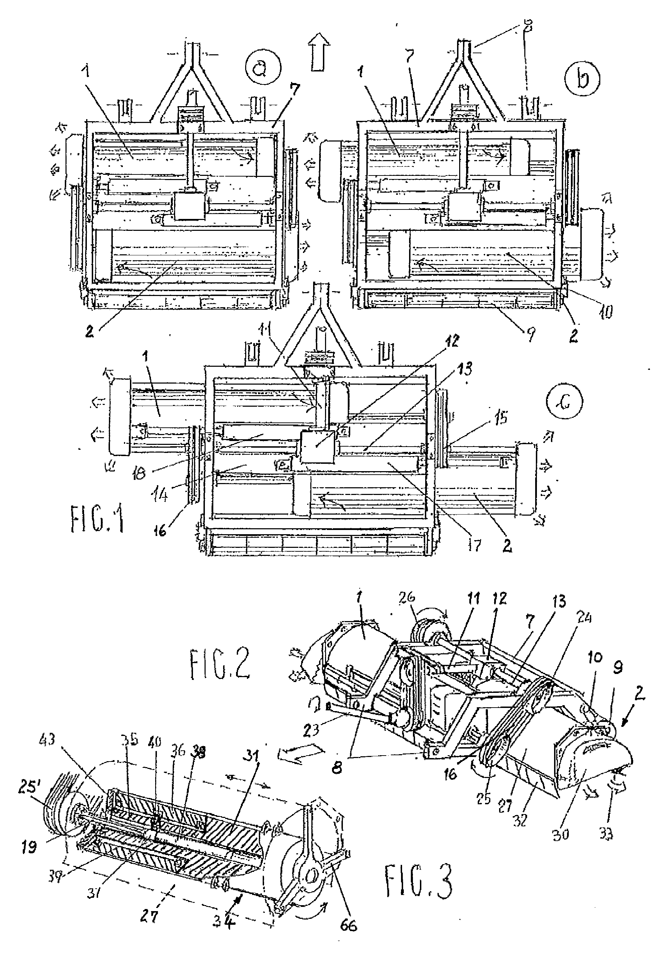

Figure 1 shows a plan drawing illustrating the device as per the invention equipped with two units 1 and 2 in three different positions a, b and c:
**a)** closed position (minimum width): the front unit 1 performs shredding over 50% of its rotor 34 length (see fig. 3) and mulching on its left side. The rear unit 2, which performs mulching on the right side and is also housed in the frame 7, is always active and works on the remaining 50% of field grass to be cut;
**b)** intermediate position of units 1 and 2 showing also the device frame 7, the connection to the tractor rear lifting group 8, the rear roller featured by bearing sectors 9 and height adjustable by means of small side jacks 10;
**c)** the maximum possible working width shows both front 1 and rear 2 units shredding over 100% of their length. The motion transmission upper central shaft 11 driven by the tractor power take-off is connected, through the central angle-shaped driving gear 12, to the upper transversal shafts 13 operating the opposite upper driving pulleys 26 e 24 (see fig. 2) by means of the right 15 and left 16 straps. The lower dovetailed shafts 19 operate the shredding and mulching rotors 34 (see fig. 3). Two hydraulic jacks 17 and 18 are also called for, both opposite and parallel and fixed on one side to the central frame 14, and on the other to the RT and LF operating units, in order to let them slide thus varying the working width.

Figure 2 represents a simplified view showing the device frame 7, the rear roller 9 along with its jack 10, the connections to the lifting group arms 8, the universal shaft 23, the left strap upper driving pulley 24, the lower secondary pulley 25 and the right driving pulley 26. The rear unit 2 is represented widened to the left and is equipped with a mulching cover 30, the oscillating plates of which 32 hang from its front edge, while its rear edge is chute-shaped 33.

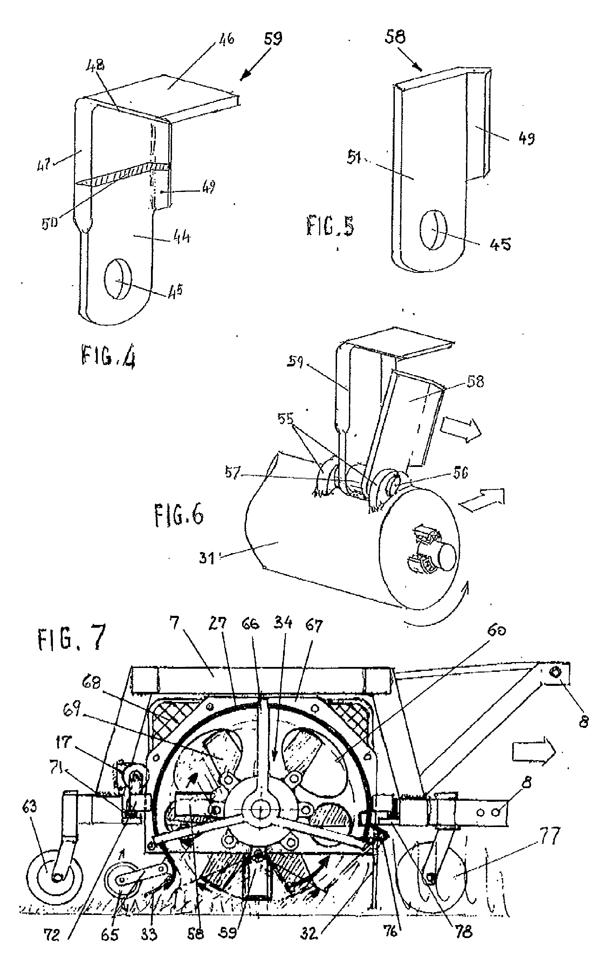

Figure 3 shows the rotor 34 of the first unit 1 composed of a hollow section 31 having a larger outside diameter forming an integral part with an inside hollow section 35 having a reduced outside diameter. The hollow section 31 is located on the outer side, which sticks out of the frame 7 in its maximum working width as shown in figure 1c. The inside reduced diameter section 35 is equipped with a bar 36 equipped with knives 58, 59 on its outer surface and free to idle turn on the inside section 35. The outer diameter of the bar 36 is equal to the one of the hollow section 31. In this way the entire rotor 34 is divided into two parts having the same axial length and both supporting the knives 58 and 59 (see fig. 6).

In a simplified version, the section 31 can be composed of two pipes dovetailed one inside the other, with the inside one being prolonged towards head 43, thus forming also the reduced diameter inside hollow section 35.

As already explained when describing figure 2, each rotor 34 of the two units 1, 2 rotates by means of its lower pulley 25, 25', which makes the corresponding rotor 34 turn. The rotor 34 of the second unit 2 is composed of a single body without idle bar, whereas the rotor 34 of the first unit 1 rotates by means of a duly shaped shaft 19 (fig. 3), for example a polygonal section shaft or a geometrical coupling grooved shaft with the central hole of the inner head 43 fixed onto the hollow section 35 of the rotor 34. In an intermediate position the shaped shaft 19 becomes a cylinder shaft 38 having a larger diameter. In this intermediate position the device calls for a conic cam 37, equipped with at least one radially movable post 40 suitable to block the bar 36 on the reduced diameter inside section 35 of the rotor 34, thus guaranteeing the dynamic balancing of the rotor 34, which is set up during assembly operations.

When the two units 1 and 2 and therefore the relevant rotors 34 are in the retracted position, as shown in figure 1a, the bar 36 of the rotor 34 of the first unit 1 only is not blocked by the posts 40 and therefore does not rotate thanks to the shaft 19-38. In this way it shreds only over approx. half the length of the rotor 34, i.e. the outside section 31, thus avoiding to also shred the grass in front of the other half of the rotor 34 of the following unit 2. By widening the two units 1 and 2 through their jack 18 - the cylinder of which is fixed to the frame 7, whereas the piston rod is fixed to the protective covering 27 - as shown in figure 1c, the entire rotor 34 of the first unit 1 moves along its shaft 19-38. Thanks to this movement the posts 40 get in contact with the conic cam 37 and are therefore radially moved in order to block the bar 36 on the inside section 35 of the rotor 34. As a consequence, in the widened position the two rotors 34 can shred along their whole length.

Thanks to the fact that the rotor 34 is composed of two corresponding sections, each one having an operation length equal to approx. 50% of the rotor, the device is featured by an asymmetric arrangement in order to get similar mulching volumes on both sides of the plant row and to assure the dynamic rotor balancing 34 with any type of clutch.

Figure 3 shows with a broken line the protective covering profile 27 and the front support of the rotor 34 represented here in the three spoke version 66 with large spaces in order to allow the fine grass thru-put.

Figure 4 shoes an L-shaped shredding and ventilating knife 59 having the rear ventilating flap 49 inclined along a radium. The figure shows the knife body 44, the hole 45 for the rotor fixing pin, the tangent shredding section 46 with the sharpened front radial edge 47 and tangent (outer) edge 48, the rear ventilating flap 49 and a transversal section 50 marked with inclined lines.

Figure 5 shows a simply ventilating knife 58 along with its body 51, the hole 45 for the pin 56 (see fig. 6) and the single rear ventilating flap 49.

Figure 6 shows an example of the coupling of the knives 58, 59 with the outside section 31 of the rotor 34 with the fixing couple as per item 55, the pin 56 and a spacer 57 between the couple of ventilating 58 and shredding 59 knives.

Figure 7 shows a lateral view of a device mulching side, which is here represented, for an easier comprehension, with a single unit without cover. The figure shows the frame 7 with the fixing points to the tractor lifting group 8, the rear pivoting supporting wheels 63, the enveloping cover 27 with its chute shape on its rear edge 33, the possible airtight roller 65, the three outer rotor 34 holding arms 66, the stiffening frame 67 of the protective covering 27 with the relevant holes for fixing the mulching cover 30 (see fig. 2), as well as the air intakes 68 above the suction cover inside the protective covering 27. The figure also partially shows the openings 60 on the inner head plate letting the air in, the fan vanes 69 fitted onto the rotor 34, the double-effect jack head 17 (see fig. 1c), which makes the unit 2 slide along the guides 78 of the frame 7 by means of a set of small wheels 71 fitted onto the side frame members 72 of the protective covering 27. In addition the figure shows an example of ventilating knife 58 and of a shredding knife 59, both having a controlled oscillation in order to avoid breakdowns, the plates 32 which oscillate on their front edge, bend the grass to be shred, avoid the throwing of foreign bodies and assure a sufficient air tightness along the front edge of the protective covering 27; the profile 76 limits the plates oscillation and avoids any interference with the knives. On its rear side the protective covering 27 is duly shaped in order to slide on the field grass already cut at the desired height.

We wish to stress here that in order to get a perfect grass cut it is better to have the possibility to adjust the height of the front side of the device as well: this can be obtained by the operator acting on the tractor lifting device "according to his feeling", or better by means of suitable parts placed on the tractor and detecting the contact with the ground of the device connection to the same, or even by means of front wheels as per item 77, the diameter of which must be suitable for the grass height and which must be of the pivoting and height adjustable type, as the rear ones.

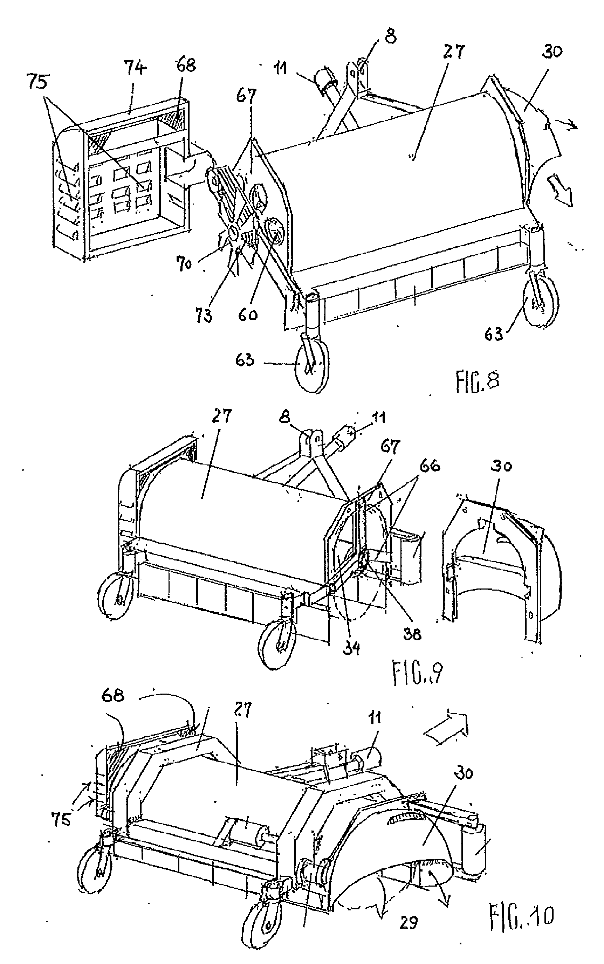

Figures 8 to 10 show an example of the device, shown here for easier understanding with a single mono lateral shredding - mulching unit, without its frame but with the protective covering 27. The figures show the connections 8 to the tractor lifting group, the transmission universal shaft 11 and the ground contact wheels 63.

Figure 8 shows a view of the suction side with the head 67 equipped with the openings 60 and with the axial axis 73 fan 70. The cover 74 of the head 67 is equipped with windows 75 and air intakes 68 (see also figure 10) for air admission; it is shown in the open position.

Figures 9 and 10 show the above unit from the opposite side, i.e. the mulching head with its cover 30, the fixed arms 66 supporting the rotor 34, as well as the relevant shaft 38. The arms 66, featured by wide openings to permit the air - fine grass mixture thru-put, are fixed to the frame 67. In figure 9 the cover 30 is removed, whereas in figure 10 it is represented in its closed position. The cover 30 widens downwards in order to reduce the speed of the flow 29 and facilitate fine grass distribution on the soil.

The variable working width of the device, preferably also while in motion, permits to carry out the vegetable mulching at the foot of the plant row/s, that hinders the growth of weeds and, also thanks to its increasing in volume upon each intervention, keeps humidity in the plant roots, reduces the need for chemical weed killers, and thus the impact on the environment, and, by performing two functions at a time, trampling on the ground.

## Claims

1. Multi-function mechanized agricultural device, suitable to carry out shredding operations of green covered strips between rows of vineyards, orchards and hedges and to simultaneously convey the fine grass at the foot of one or both the adjacent rows (bilateral version), **characterized in that** the device is composed of at least one, preferably two opposite transversal and parallel units (1, 2), contained in a frame (7) to be fitted onto the front or rear lifting group (8) of a tractor and with the rear side touching the ground, each unit incorporating a motorized horizontal rotor (34) holding multiple knives of the cutting (59) and/or ventilating type (58) and housed in a protective covering (27), the heads of which are basically open, though protected by suitable covers (30) easily removable on the inner suction side and on the outer mulching one, each unit (1, 2) being transversally slidable along the frame (7) for varying the working width.

2. Agricultural device according to claim 1, composed of two opposite transversal and parallel shredding-mulching units (1, 2), which, by means of opposite actuators (17, 18), can slide on guides (78) of the lifting central frame (7).

3. Agricultural device according to claim 1 or 2, wherein each unit (1, 2) incorporates a protective covering (27) enveloping the rotor (34) as much as possible and with its front border supporting a set of adjacent blades (32) with limited oscillation, suitable to bend the high grass and forming basically a wall; whereas the rear border is chute-shaped (33) and preferably ends with a flexible flap of a continuous type or divided into segments, which slips on the cut grass in order to reduce lateral air leakage and guarantee a sufficient air flow to convey the fine grass to the mulching mouth.

4. Agricultural device according to any of the preceding claims, **characterized by** hydro-mechanic or electro-mechanic actuators (17, 18) driven either manually or by trunk proximity detectors in order to vary the working width, and by unit (1, 2) repositioning means controlled by known linear indicators duly programmed in order to avoid lateral obstacles.

5. Agricultural device according to any of the preceding claims, **characterized by** mechanic motorization taken from the tractor direct power take-off comprising shafts (23, 11, 13), driving gears (12), straps and pulleys (24, 25, 26) fitted onto the main frame (7).

6. Agricultural device as per claim 5 wherein the motion transmission to the rotors (34) of the sliding units (1, 2) is obtained by means of a shaft duly shaped in its outer surface (41) and entering female housings of the rotor (34), which is internally hollow and preferably incorporates free wheel device in the driving gear, in order to ensure motion transmission in all the positions taken by the units (1, 2) with respect to the main frame (7).

7. Agricultural device according to any of the preceding claims, **characterized by** oleo-dynamic motors located on the suction head of each unit (1, 2), which therefore slide with the units (1, 2) with respect to the main frame (7).

8. Agricultural device according to any of the preceding claims wherein each rotor (34) is equipped with cutting and ventilating knives (59, 58) of the semi-oscillating type fitted onto the rotor (34).

9. Agricultural device according to claim 8, **characterized by** L-shaped cutting knives (59) equipped with a cutting flap (46) and a ventilating flap (49), whereas the ventilating knives (58) comprise a plain body (51) with a ventilating flap (49) sticking out of the same.

10. Agricultural device according to any of the preceding claims, incorporating, upstream of each rotor (34) and of the relevant protective covering (37), an axial impeller or a ventilating vane centrifugal unit (69) coaxial to the rotor (34) and located inside the suction cover (27).

11. Agricultural device according to any of the preceding claims, wherein the rotor (34) of at least one unit (1) is composed of a hollow section (31) with a larger outer diameter, one end of which located inside the protective covering (27) is an integral part of a hollow inner section (35) with a reduced outer diameter, such inner section being equipped with at least one turning knife-holding bar (36) of the same larger diameter suitable to be blocked in rotation on the above inner section (35).

12. Device according to claim 11 wherein the length of the bar (36) is the same as the one of the hollow section (31).

13. Device according to claim 11 or 12, wherein the driving shaft (19, 38) of the rotor (34) is equipped with a conic cam (37) suitable to move at least one radial post (40) to block and unblock the bar (36) while the rotor (34) moves axially.

14. Device according to any of the preceding claims **characterized in that** the suction side of each unit (1, 2) is equipped with a fan (70), as well as with a head (67) with openings (60) and closed by a cover (74) equipped with windows (75) and air intakes (68) for air admission.

15. Device according to any of the preceding claims, wherein the mulching side of each unit (1, 2) is closed by a removable cover (30) being open in its lower area (29).
